# EUROPEAN PATENT SPECIFICATION

(11) **EP 1 222 838 B1**
(45) Date of publication and mention of the grant of the patent: **17.09.2003**
(21) Application number: 00969701.2
(22) Date of filing: 19.10.2000
(51) Int. Cl.: H04R 1/02, H04R 7/06, G06F 3/023

(54) **KEYBOARD COMPRISING A LOUDSPEAKER**
TASTATUR MIT EINEM LAUTSPRECHER
CLAVIER COMPRENANT UN HAUT-PARLEUR

(30) Priority: 22.10.1999 GB 9924932
(43) Date of publication of application: 17.07.2002
(73) Proprietor: New Transducers Limited, London SW3 3QH (GB)
(72) Inventor: AZIMA, Farad, Kensington, London W8 5LS (GB); COLLOMS, Martin, London NW2 2DA (GB)
(74) Representative: Maguire, Peter Albert
(86) International application number: GB0004052
(87) International publication number: WO01031971

(56) References cited:
- EP-A- 0 886 457
- WO-A-98/43464
- US-A- 5 732 140
- US-A- 5 828 768
- US-A- 5 930 376

## Description

### TECHNICAL FIELD

The invention relates to keyboards as used, for example, in typewriters and computers.

### BACKGROUND ART

It is known to provide loudspeakers in the keyboard of a computer see for example US 5,892,503. Space is at a premium in a keyboard and thus small loudspeakers must be used. However, conventional pistonic loudspeakers which are small enough to fit in such confined areas are generally incapable of producing an acoustic output with a wide frequency range such as is required for music or speech reproduction. Generally, the frequency range of such small loudspeakers is limited and thus the loudspeakers produce no more than a few simple tones, e.g. bell rings and bleeps

It is an object of the present invention to provide a keyboard of enhanced functionality.

### DISCLOSURE OF INVENTION

A keyboard comprising a bending wave loudspeaker comprising an acoustic radiator capable of supporting bending waves and a transducer mounted on the acoustic radiator to excite bending waves in the acoustic radiator to produce an acoustic output and a housing comprising a base, support means for supporting the base above a work surface on which the keyboard is placed to define a gap between the base and the work surface, the bending wave loudspeaker being positioned in the housing so that its acoustic output is transmitted to a user via the gap.

The loudspeaker may be a resonant bending wave mode loudspeaker comprising an acoustic radiator capable of supporting resonant bending wave modes and a transducer mounted on the acoustic radiator to excite resonant bending wave modes in the acoustic radiator to produce an acoustic output

Such a resonant bending wave mode loudspeaker is described in WO98/0984 and other patent applications and publications and may be referred to as a distributed mode loudspeaker.

The keyboard may comprise two loudspeakers, for example, a right and a left channel for stereo audio reproduction.

The keyboard may be a stand-alone device connected, for example, to a computer and monitor by an electrical cable or lead. The support means may be in the form of feet so that the base may be raised above the work surface on which the keyboard is placed. The whole, or alternatively only part, of the base may not be in contact with the rest surface when the base is raised on the feet.

The or each loudspeaker may be integrally formed with the base of the housing or may be a separate unit mounted in the base of the housing. The housing may further comprises side walls and a top defining with the base a cavity in the housing. Alternatively, the or each loudspeaker may be mounted inside the cavity. The or each loudspeaker may be supported on mounting which may be either resilient or rigid. The base of the housing may be acoustically transparent to allow acoustic output from the loudspeaker to be transmitted to a user. The base of the housing may comprise a grid, a pierced panel or acoustically porous mounting. The box may thus comprise at least one slot.

One property of a distributed mode radiator is the diffuse nature of the propagation of acoustic output from the radiator. Accordingly, although the or each loudspeaker is located on the base of the housing or in the housing whereby sound is primarily transmitted though the base, the acoustic output circulates to the user. In particular, when the base is raised from the rest surface, acoustic output may reflect off the rest surface to the user.

There is generally positive interference between the reflected acoustic output and the radiated acoustic output which may improve the performance of the loudspeaker. In contrast, if a conventional loudspeaker were to be mounted in the base of the keyboard or inside the keyboard with the only sound radiation from the base of the keyboard, the reflected acoustic output and the radiated acoustic output would destructively interfere. Thus such an arrangement is unlikely to be possible with a conventional pistonic loudspeaker.

The properties of the acoustic radiator may be chosen to distribute the resonant bending wave modes substantially evenly in frequency. In other words, the properties or parameters, e.g. size, thickness, shape, material etc., of the acoustic radiator may be chosen to smooth peaks in the frequency response caused by "bunching" or clustering of the modes. The resultant distribution of resonant bending wave modes may thus be such that there are substantially minimal clusterings and disparities of spacing.

In particular, the properties of the acoustic radiator may be chosen to distribute the lower frequency resonant bending wave modes substantially evenly in frequency. The distribution of resonant bending wave modes is less dense at lower frequency than at higher frequency and thus the distribution of the lower frequency resonant bending wave modes is particularly important. The lower frequency resonant bending wave modes are preferably the ten to twenty lowest frequency resonant bending wave modes of the acoustic radiator. For an acoustic radiator for use in a keyboard, the lower frequency resonant bending wave modes may all be below 3 kHz.

The resonant bending wave modes associated with each conceptual axis of the acoustic radiator may be arranged to be interleaved in frequency. Each conceptual axis has an associated lowest fundamental frequency (conceptual frequency) and higher modes at spaced frequencies. By interleaving the modes associated with each axis, the substantially even distribution may be achieved. There may be two conceptual axes and the axes may be symmetry axes. For example, for a rectangular acoustic radiator, the axes may be a short and a long axis parallel to a short and a long side of the acoustic radiator respectively. For an elliptical acoustic radiator, the axes may correspond to the major and minor axis of the ellipse. The axes may be orthogonal.

The transducer may be grounded or partially grounded. The transducer may be piezoelectric. The transducer location may be chosen to couple substantially evenly to the resonant bending wave modes. In particular, the transducer location may be chosen to couple substantially evenly to lower frequency resonant bending wave modes. In other words, the transducer may be mounted at a location spaced away from nodes (or dead spots) of as many lower frequency resonant modes as possible. Thus the transducer may be at a location where the number of vibrationally active resonance anti-nodes is relatively high and conversely the number of resonance nodes is relatively low. Any such location may be used, but the most convenient locations are the near-central locations between 38% to 62% along each of the length and width axes of the panel, but off-central. Specific locations found suitable are at 3/7, 4/9 or 5/13 of the distance along the axes; a different ratio for the length axis and the width axis is preferred.

The acoustic radiator may have selected values of certain physical parameters which enable the acoustic radiator to sustain and propagate input vibrational energy in a predetermined frequency range by a plurality of resonant bending wave modes in a least one operative area extending transversely of thickness such that the frequencies of the resonant bending wave modes along at least two conceptual axes of the operative area are interleaved and spread so that there are substantially minimal clusterings and disparities of spacings of said frequencies, the acoustic radiator when resonating have at least one site at which the number of vibrationally active resonance anti-nodes is relatively high and a transducer mounted wholly and exclusively on the acoustic radiator at one of said sites on the acoustic radiator, the transducer being capable of vibrating the acoustic radiator in the predetermined frequency range to couple to and excite the resonant bending wave modes in the acoustic radiator and cause the acoustic radiator to resonate and produce an acoustic output.

The acoustic radiator may be in the form of a panel. The panel may be flat and may be lightweight. The material of the acoustic radiator may be anisotropic or isotropic.

Thus, the acoustic radiator may be integrated in the keyboard without adding too much to the size and weight of the keyboard. In contrast, a conventional pistonic loudspeaker is likely to add too much to the size and weight of the keyboard to be practical.

The low form factor of a thin panel speaker makes it uniquely suited to a keyboard, which does not benefit from unnecessary thickness.

In a first embodiment, the keyboard may be of the kind having individual alphanumeric keys which may be electrically connected to associated display and/or printing means. The individual keys forming the keyboard may be supported on the housing, e.g. on a top of the housing. In a second embodiment, the keyboard may comprise a touchpad which may be supported on the base of the housing. The touchpad may be integral with one or more loudspeakers. Alternatively or additionally, the keyboard may comprise a flat panel loudspeaker carrying touch pads to form the keys.

The keyboard may also incorporate data readout and/or display units to enhance functionality.

### BRIEF DESCRIPTION OF DRAWINGS

The invention is diagrammatically illustrated, by way of example, in the accompanying drawings, in which:-
Figure 1 is an exploded perspective view of a first embodiment of keyboard,
Figure 2 is an exploded perspective view of a second embodiment of keyboard, and
Figure 3 is an exploded perspective view of a third embodiment of keyboard.

### BEST MODES FOR CARRYING OUT THE INVENTION

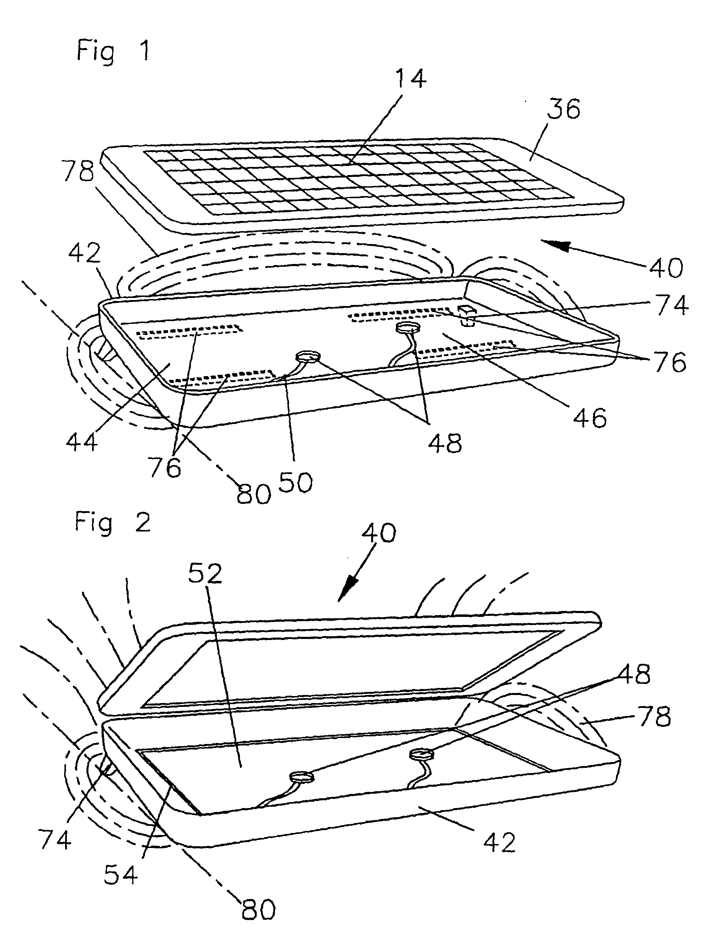

In Figure 1 there is shown a keyboard (40) comprising a housing (42) formed as a shallow tray. A lid or top (36) is attached to the housing and support individual alphanumeric keys (14). The base (44) of the housing (42) supports a loudspeaker comprising a panel (46) to which two exciters (48) are attached. An acoustic signal is inputted to the exciters via wires (50) to induce vibration of the loudspeaker to produce an acoustic output.

There are slots (76) in the base (44) so that sound is transmitted from the loudspeaker through the base (44). Although the acoustic output is mainly radiated to the underside, the keyboard is raised on support means in the form of rear legs (74) away from the plane (80) of a desk or other work surface. This usual offset stance defines a gap between the desk and the base (44) of the keyboard. The sound energy circulates quite effectively to the user through the gap as shown by the alternate dotted and dashed lines (78). In particular, the sound energy may be reflected by the desk or keyboard support. Single and multi signal channel operation is envisaged.

Figure 2 shows a keyboard (40) similar to that in Figure 1. A loudspeaker comprising a panel (52) and two exciters (48) mounted on the panel is carried by the inner case (42) and mounted in an aperture in the base (44) of the inner case. A resilient suspension (54) surrounds the loudspeaker and supports the loudspeaker in the aperture in the base. The loudspeaker is thus part of the casework of the keyboard. The base (44) may be formed with more than one aperture to accommodate additional discrete distributed mode loudspeaker units to radiate by reflection as above in Figure 1.

As in Figure 1, the keyboard is raised on rear legs (74) away from the plane (80) of the desk. The sound energy circulates as shown by the alternate dotted and dashed lines (78) in a similar manner to that of Figure 1.

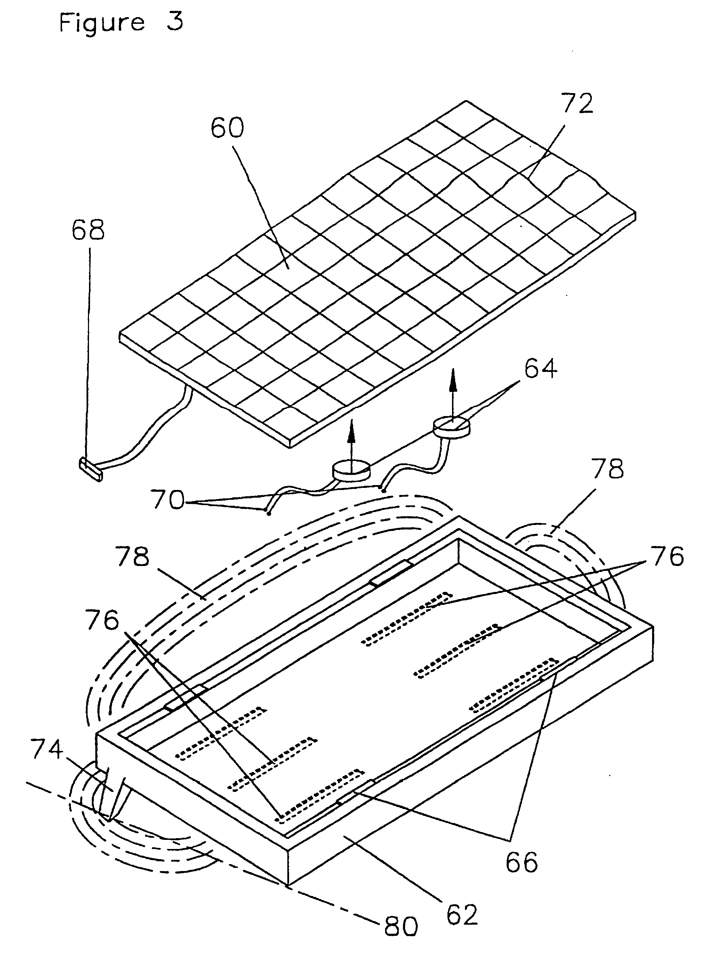

Figure 3 shows a keyboard comprising a touchpad (60) and a housing or casing (62) in the form of a shallow tray. The keyboard comprises a loudspeaker comprising a panel (72) which is integral with the touchpad (60) and a pair of exciters (64). Data is outputted from the touchpad a loudspeaker via an output terminal (68) and an acoustic signal is fed to the exciters (64) via wires (70). The dual loudspeaker and touchpad is supported by the housing (62) which forms a loudspeaker enclosure. The dual loudspeaker and touchpad is supported on resilient suspension pads (66).

The keyboard is raised on rear legs (74) away from the plane (80) of the desk to define a gap between the keyboard base and the desk. Furthermore, slots (76) are provided in the base (44) so that sound is transmitted from the loudspeaker through the base (44). Sound energy circulates through the slots (76) and the gap and is reflected off the desk to the user as shown by the alternate dotted and dashed lines (78).

### INDUSTRIAL APPLICABILITY

The invention may be applied to keyboards, particularly those for use in conjunction with computers.

## Claims

1. A keyboard (40) comprising a bending wave loudspeaker comprising an acoustic radiator (46,72) capable of supporting bending waves and a transducer (48,64) mounted on the acoustic radiator (46,72) to excite bending waves in the acoustic radiator to produce an acoustic output and a housing (42,62) comprising a base (44), support means (74) for supporting the base above a work surface on which the keyboard (40) is placed to define a gap between the base (44) and the work surface, the bending wave loudspeaker being positioned in the housing (42,62) so that its acoustic output is transmitted to a user via the gap.

2. A keyboard (40) according to claim 1, wherein the loudspeaker is a resonant bending wave mode loudspeaker comprising an acoustic radiator (46,72) capable of supporting resonant bending wave modes and a transducer (48,64) mounted on the acoustic radiator to excite resonant bending wave modes in the acoustic radiator (46,72) to produce an acoustic output.

3. A keyboard according to claim 2, wherein the properties of the acoustic radiator (46,72) are chosen to distribute the resonant bending wave modes substantially evenly in frequency.

4. A keyboard (40) according to claim 2 or claim 3, wherein the resonant bending wave modes associated with a first conceptual axis of the acoustic radiator (46, 72) are arranged to be interleaved in frequency with the resonant bending wave modes associated with a second conceptual axis.

5. A keyboard according to any one of claims 2 to 4, wherein the transducer (48,64) location couples substantially evenly to the resonant bending wave modes.

6. A keyboard according to any one of the preceding claims, wherein the acoustic radiator (46,72) is in the form of a panel.

7. A keyboard (40) according to claim 6, wherein the panel is flat.

8. A keyboard according to any one of the preceding claims, wherein the loudspeaker is integral with the base of the housing.

9. A keyboard according to any one of claims 1 to 7, wherein the loudspeaker is supported in the base of the housing.

10. A keyboard according to any one of claims 1 to 7, wherein the housing further comprises side walls and a top which together with the base (44) define a cavity in the housing and the loudspeaker is supported in the housing.

11. A keyboard according to claim 9 or claim 10, wherein the or each loudspeaker is supported on resilient mounting (54,66).

12. A keyboard according to any one of claims 9 to 11, wherein the base (44) of the housing is acoustically transparent to allow acoustic output from the loudspeaker to be transmitted to a user.

13. A keyboard according to claim 12, wherein the base of the housing comprises at least one slot (76).

14. A keyboard according to any one of the preceding claims wherein the keyboard comprises individual alphanumeric keys (14) which are supported on the housing.

15. A keyboard according to any one of claims 1 to 13, wherein the keyboard comprises a touchpad (60) and the touchpad is integral with the loudspeaker.

16. A keyboard according to any preceding claim, wherein the keyboard comprises two loudspeakers.

## Patentansprüche

1. Tastatur (40) mit einem Biegewellenlautsprecher, der einen akustischen Strahler (46, 72), der Biegewellen unterstützen kann, und einen Wandler (48, 64) umfasst, der an dem akustischen Strahler (46, 72) angebracht ist, um zum Erzeugen einer akustischen Ausgabe Biegewellen in dem akustischen Wandler anzuregen, und einem Gehäuse (42, 62), das eine Basis (44) und Abstützmittel (74) umfasst, um die Basis oberhalb einer Arbeitsfläche, auf der die Tastatur (40) angeordnet ist, abzustützen, um zwischen der Basis (44) und der Arbeitsfläche einen Zwischenraum zu definieren, wobei der Biegewellenlautsprecher in dem Gehäuse (42, 62) so angeordnet ist, dass dessen akustische Ausgabe über den Zwischenraum zu einem Benutzer übertragen wird.

2. Tastatur (40) nach Anspruch 1, bei der der Lautsprecher ein Resonanzbiegewellenmodenlautsprecher ist, der einen akustischen Strahler (46, 72), der Resonanzbiegewellenmoden unterstützen kann, und einen Wandler (48, 64) umfasst, der an dem akustischen Strahler angebracht ist, um zum Erzeugen einer akustischen Ausgabe in dem akustischen Strahler (46, 72), Resonanzbiegewellenmoden anzuregen.

3. Tastatur nach Anspruch 2, bei der die Eigenschaften des akustischen Strahlers (46, 72) gewählt sind, um die Resonanzbiegewellenmoden hinsichtlich der Frequenz im Wesentlichen gleich zu verteilen.

4. Tastatur (40) nach Anspruch 2 oder Anspruch 3, bei der die einer ersten Wahrnehmungsachse des akustischen Strahlers (46, 72) zugeordneten Resonanzbiegewellenmoden so festgelegt sind, dass sie hinsichtlich der Frequenz mit den einer zweiten Wahrnehmungsachse zugeordneten Resonanzbiegewellenmoden verschachtelt sind.

5. Tastatur nach einem der Ansprüche 2 bis 4, bei der der Ort des Wandlers (48, 64) im Wesentlichen gleichmäßig mit den Resonanzbiegewellenmoden koppelt.

6. Tastatur nach einem der vorhergehenden Ansprüche, bei der der akustische Strahler (46, 72) die Gestalt eines Paneels hat.

7. Tastatur (40) nach Anspruch 6, bei der das Paneel flach ist.

8. Tastatur nach einem der vorhergehenden Ansprüche, bei der der Lautsprecher integral mit der Basis des Gehäuses ausgeführt ist.

9. Tastatur nach einem der Ansprüche 1 bis 7, bei der der Lautsprecher in der Basis des Gehäuses abgestützt ist.

10. Tastatur nach einem der Ansprüche 1 bis 7, bei der das Gehäuse ferner Seitenwände und eine Oberseite umfasst, die zusammen mit der Basis (44) einen Hohlraum in dem Gehäuse definiert, und der Lautsprecher in dem Gehäuse abgestützt ist.

11. Tastatur nach Anspruch 9 oder Anspruch 10, bei der der oder jeder Lautsprecher auf einer elastischen Befestigung (54, 66) abgestützt ist.

12. Tastatur nach einem der Ansprüche 9 bis 11, bei der die Basis (44) des Gehäuses akustisch transparent ist, um zu ermöglichen, dass eine akustische Ausgabe von dem Lautsprecher zu einem Benutzer übertragen wird.

13. Tastatur nach Anspruch 12, bei der die Basis des Gehäuses wenigstens einen Schlitz (76) umfasst.

14. Tastatur nach einem der vorhergehenden Ansprüche, bei der die Tastatur einzelne alphanumerische Tasten (14) umfasst, die auf dem Gehäuse abgestützt sind.

15. Tastatur nach einem der Ansprüche 1 bis 13, bei der die Tastatur ein berührempfindliches Feld (60) umfasst und das berührempfindliche Feld integral mit dem Lautsprecher ausgeführt ist.

16. Tastatur nach einem der vorhergehenden Ansprüche, bei der die Tastatur zwei Lautsprecher umfasst.

## Revendications

1. Un clavier (40) comprenant un haut-parleur à ondes de flexion comprenant un radiateur acoustique (46, 72) capable de supporter des ondes de flexion et un transducteur (48, 64) monté sur le radiateur acoustique (46, 72) pour exciter des ondes de flexion dans le radiateur acoustique de façon à produire une émission acoustique, et un boîtier (42, 62) comprenant une base (44), des moyens de support (74) pour supporter la base au-dessus d'une surface de travail sur laquelle le clavier (40) est placé, de façon à définir un espace entre la base (44) et la surface de travail, le haut-parleur à ondes de flexion étant placé dans le boîtier (42, 62) de façon que son émission acoustique soit transmise à un utilisateur à travers l'espace précité.

2. Un clavier (40) selon la revendication 1, dans lequel le haut-parleur est un haut-parleur à modes d'ondes de flexion résonnants comprenant un radiateur acoustique (46, 72) capable de supporter des modes d'ondes de flexion résonnants et un transducteur (48, 64) monté sur le radiateur acoustique de façon à exciter des modes d'ondes de flexion résonnants dans le radiateur acoustique (46, 72) pour produire une émission acoustique.

3. Un clavier selon la revendication 2, dans lequel les propriétés du radiateur acoustique (46, 72) sont choisies de façon à donner une répartition en fréquence pratiquement uniforme pour les modes d'ondes de flexion résonnants.

4. Un clavier (40) selon la revendication 2 ou la revendication 3, dans lequel les modes d'ondes de flexion résonnants associés à un premier axe imaginaire du radiateur acoustique (46, 72) sont entrelacés en fréquence avec les modes d'ondes de flexion résonnants associés à un second axe imaginaire.

5. Un clavier selon l'une quelconque des revendications 2 à 4, dans lequel l'emplacement du transducteur (48, 64) donne un couplage pratiquement uniforme avec les modes d'ondes de flexion résonnants.

6. Un clavier selon l'une quelconque des revendications précédentes, dans lequel le radiateur acoustique (46, 72) est sous la forme d'un panneau.

7. Un clavier (40) selon la revendication 6, dans lequel le panneau est plat.

8. Un clavier selon l'une quelconque des revendications précédentes, dans lequel le haut-parleur est intégré à la base du boîtier.

9. Un clavier selon l'une quelconque des revendications 1 à 7, dans lequel le haut-parleur est supporté dans la base du boîtier.

10. Un clavier selon l'une quelconque des revendications 1 à 7, dans lequel le boîtier comprend en outre des parois latérales et une paroi supérieure qui, conjointement à la base (44), définissent une cavité dans le boîtier, et le haut-parleur est supporté dans le boîtier.

11. Un clavier selon la revendication 9 ou la revendication 10, dans lequel le haut-parleur, ou chacun d'eux, est supporté sur une monture élastique (54, 66).

12. Un clavier selon l'une quelconque des revendications 9 à 11, dans lequel la base (44) du boîtier est acoustiquement transparente pour permettre de transmettre à un utilisateur l'émission acoustique provenant du haut-parleur.

13. Un clavier selon la revendication 12, dans lequel la base du boîtier comprend au moins une fente (76).

14. Un clavier selon l'une quelconque des revendications précédentes, dans lequel le clavier comprend des touches alphanumériques individuelles (14) qui sont supportées sur le boîtier.

15. Un clavier selon l'une quelconque des revendications 1 à 13, dans lequel le clavier comprend un panneau tactile (60) et le panneau tactile et le haut-parleur sont formés de manière intégrée.

16. Un clavier selon l'une quelconque des revendications précédentes, dans lequel le clavier comprend deux haut-parleurs.
